# EUROPÄISCHE PATENTSCHRIFT

(11) **EP 2 228 284 B1**
(45) Veröffentlichungstag und Bekanntmachung des Hinweises auf die Patenterteilung: **19.09.2012**
(21) Anmeldenummer: 10002547.7
(22) Anmeldetag: 11.03.2010
(51) Int. Cl.: B62D 5/00, B62D 6/00, B62D 5/04

(54) **Verfahren zum Betreiben eines Lenkungssystems in einem Kraftfahrzeug**
Method for operating a steering system in a motor vehicle
Procédé de fonctionnement d'un système de direction dans un véhicule automobile

(30) Priorität: 12.03.2009 DE 102009012932
(43) Veröffentlichungstag der Anmeldung: 15.09.2010
(73) Patentinhaber: AUDI AG, 85045 Ingolstadt (DE)
(72) Erfinder: Ullmann, Stefan, 80797 München (DE); Stemmer, Martin, 85445 Niederding (DE)
(74) Vertreter: Patzelt, Heike Anna Maria

(56) Entgegenhaltungen:
- DE-A1- 10 325 484
- DE-A1-102006 025 790
- DE-A1-102006 036 751

## Beschreibung

Die Erfindung betrifft ein Verfahren zum Betreiben eines Lenkungssystems in einem Kraftfahrzeug.

Hierbei ist von einem Lenkungssystem ausgegangen, das sowohl eine Hilfskraftlenkung, als auch eine Überlagerungslenkung aufweist. Dies beinhaltet, dass eine Lenkhandhabe mit einer ersten Welle gekoppelt ist, und eine Drehung der ersten Welle wird in ein Überlagerungsgetriebe eingetragen, an deren Ausgang eine zweite Welle bereitgestellt ist, die sich dann aufgrund der Drehung der ersten Welle dreht. Der zweiten Welle ist eine eine Hilfskraft bereitstellende Einheit nachgeordnet, welche die von der zweiten Welle auf die mit ihr gekoppelten Räder übertragene Kraft in an sich bekannter Weise erhöht. Kennzeichen des Überlagerungsgetriebes ist es, dass in es eine dritte Welle hineingeführt ist, als zweiter Eingang. Die dritte Welle ist mit einem Elektromotor gekoppelt, der ihr eine Drehung aufprägen kann. Zweck hiervon ist es, dass sich die zweite Welle um einen zusätzlichen Winkel dreht. Das Überlagerungsgetriebe kann als Planetengetriebe oder als Wellgetriebe ausgebildet sein. Der Elektromotor wird üblicherweise von einer Steuereinheit angesteuert. Diese arbeitet aufgrund von bestimmten Vorgaben in einem Grundbetrieb. Die vorbestimmten Vorgaben beinhalten typischerweise, dass der dritten Welle eine Drehung um einen Zusatzwinkel aufgeprägt wird, der von einem durch die Lenkhandhabe eingeprägten Lenkwinkel abhängig ist, zum Beispiel zu diesem proportional ist oder aufgrund einer mathematischen oder tabellarischen Zuordnung aus diesem hervorgeht.

Bei der Kombination von Überlagerungslenkung (mit Überlagerungsgetriebe und Elektromotor) einerseits und der Hilfskraft bereitstellenden Einheit andererseits kann es dazu kommen, dass die die Hilfskraft bereitstellende Einheit an ihre Leistungsgrenze gelangt; denn der aufgeprägte Zusatzwinkel kann unter Umständen zu hoch gewählt sein, sodass an der zweiten Welle Winkelgeschwindigkeiten erreicht werden, die durch einen Fahrzeugführer mittels einer Lenkhandhabe alleine nie dem System aufgeprägt werden könnten. Insbesondere bei Einsatz eines Elektromotors in der eine Hilfskraft bereitstellenden Einheit können diesem Elektromotor derart hohe Drehzahlen abverlangt werden, dass er an eine Drehzahlgrenze gelangt.

Die Kombination aus Überlagerungslenkung mit Hilfskraftlenkung in einem Kraftfahrzeug soll optimal ausgenutzt werden.

Dies bedeutet, dass hart an der die Leistungsgrenze der Hilfskraft bereitstellenden Einheit gearbeitet werden muss, andererseits diese aber nicht überschritten werden darf.

Aus der EP 0 904 225 B1 ist es zur Vermeidung eines Fehlbetriebs in einem System mit Überlagerungslenkung bekannt, den von dem Elektromotor aufgeprägten Zusatzwinkel kontinuierlich auslaufen zu lassen, wenn sich eine Lenkhandhabe bei ihrer Betätigung einem Lenkanschlag nähert. In diesem Falle ist Teil von vorbestimmten Vorgaben für einen Grundbetrieb der dem Elektromotor zugeordneten Steuereinheit eine hinterlegte Kennlinie für den Zusatzwinkel. Eine Anpassung an die aktuelle Lenksituation erfolgt nicht.

Aus der DE 10 2006 007 250 A1 ist es bekannt, einen Zusatzlenkwinkel so einzustellen, dass die Winkelgeschwindigkeit an der zweiten Welle einen Maximalwert nicht überschreitet, wobei dieser Maximalwert situationsabhängig festgelegt werden kann. Die Situation wird hierbei in einem Beispiel durch die Fahrzeuggeschwindigkeit bestimmt, in einem anderen Beispiel sowohl durch die Fahrzeuggeschwindigkeit, als auch durch die Lenkgeschwindigkeit. In dieser Druckschrift ist eine Hilfskraftlenkung nicht genannt, sodass auf die Leistungsfähigkeit einer solchen nicht geachtet ist. Setzte man das Verfahren aus der DE 10 2006 007 250 A1 in Verbindung mit einer Hilfskraftlenkung um, so müsste von einem mittleren, von dem Motor der die Hilfskraft bereitstellenden Einheit aufzubringenden Moment ausgegangen werden. Das Verfahren wäre dann nicht für alle Arten von Untergrund geeignet, auf dem das Kraftfahrzeug fährt, also auf dem die Räder abrollen.

Die DE 103 53 084 A1 beschreibt ein Kraftfahrzeug mit einer Hilfskraftlenkung und einer Überlagerungslenkung, bei der bei Überschreiten eines Leistungsgrenzwerts für die die Hilfskraft bereitstellende Einheit dem über die Lenkhandhabe eingeprägten Lenkwinkel ein gegengerichteter Zusatzlenkwinkel hinzugefügt wird. Der Leistungsgrenzwert ist in der DE 103 53 084 A1 als konstant, also feststehend, vorausgesetzt. Dies bedeutet, dass Schwankungen in der Leistungsfähigkeit der die Hilfskraft bereitstellenden Einheit nicht Rechnung getragen wird.

Die DE 10 2006 025 790 A1 schließlich beschreibt, dass ein zusätzlich zum Lenkwinkel dem Lenkungssystem eingeprägter Zusatzwinkel von einem momentanen Leistungszustand des Bordnetzes dieses Kraftfahrzeugs abhängig gemacht werden kann. Der Leistungszustand des Bordnetzes bestimmt zwar die Leistungsfähigkeit der die Hilfskraft bereitstellenden Einheit, insbesondere eines von dem Bordnetz gespeisten Elektromotors, ist aber nicht die ausschließlich bestimmende Größe, sodass auch hier das System so eingestellt werden muss, dass unterschiedlichen Umweltbedingungen Rechnung getragen wird. Somit kann das System auch nicht bei zahlreichen Umweltbedingungen die die Hilfskraft bereitstellende Einheit optimal ausnutzen.

Dokument DE 10 2006 036 751 A1 beschreibt die Merkmale des Oberbegriffs des Anspruchs 1.

Es ist somit Aufgabe der Erfindung, ein Verfahren zum Betreiben des Lenkungssystems in einem Kraftfahrzeug der eingangs geschilderten Art bereitzustellen, bei dem die Ausnutzung der die Hilfskraft bereitstellenden Einheit verbessert gestaltet werden kann beziehungsweise ist.

Die Aufgabe wird durch ein Verfahren mit den Schritten gemäß Patentanspruch 1 gelöst.

Erfindungsgemäß werden Signale zur Mitteilung von aktuellen Werten zumindest einer Größe der Steuereinheit zugeführt, wobei diese Größe ein Maß für die aktuelle Belastung der eine Hilfskraft bereitstellenden Einheit sein soll. Die aktuelle Belastung ergibt sich aus der tatsächlich von der die Hilfskraft bereitstellenden Einheit aufgebrachten Leistung und der theoretischen Leistungsfähigkeit. In anderem Zusammenhang würde man auch von "Auslastung" sprechen.

Die Steuereinheit unterscheidet nun aufgrund der mitgeteilten Werte zwischen zwei Situationen. In Situation a) wird ein Grundbetrieb eingestellt, in dem zumindest bei Eintragung eines Lenkwinkels durch die Lenkhandhabe die Drehung der dritte Welle um einen ersten Zusatzwinkel veranlasst wird, der ausschließlich durch die vorbestimmten Vorgaben festgelegt ist, wobei wie oben dargestellt die vorbestimmten Vorgaben eben umfassen können, dass dieser Zusatzwinkel von dem Lenkwinkel abhängig ist. Diese Abhängigkeit kann auch soweit gehen, dass bei einem Zusatzwinkel der Lenkwinkel von 0° auch ein Zusatzwinkel von 0° eingetragen wird.

In Situation b) wird außer diesem ohnehin zugegebenen Zusatzwinkel noch ein zweiter Zusatzwinkel vorgegeben, also die Drehung der dritten Welle um einen solchen zweiten Zusatzwinkel, bevorzugt in Gegenrichtung zum ersten Zusatzwinkel, veranlasst. Alternativ kann Situation b) auch eintreten, wenn die aktuelle Belastung besonders weit unter der Belastungsgrenze liegt, und dann kann der zweite Zusatzwinkel in die gleiche Richtung wie der erste Zusatzwinkel gerichtet sein.

Der zweite Zusatzwinkel kann hierbei einfach von ersten Zusatzwinkel abgezogen werden oder tatsächlich zeitverzögert (oder sogar zeitlich vorausgehend) der dritten Welle aufgeprägt werden.

Eine besonders geeignete Größe, die in dem erfindungsgemäßen Verfahren eingesetzt werden kann, ist eine Drehzahlreserve eines Elektromotors, der Teil der die Hilfskraft bereitstellenden Einheit ist. Die Drehzahlreserve ist die Differenz zwischen der maximal möglichen Drehzahl und der aktuellen Drehzahl. Die maximal mögliche Drehzahl kann aus der theoretisch aufbringbaren Leistung und dem aktuell von dem Elektromotor aufgebrachten Moment ermittelt werden. Es kann ein Kennfeld mit Kennlinien abgespeichert sein, die jeweils die Leistungsgrenze in einem Drehzahl-Momenten-Diagramm wiedergeben. Eingangsgröße für das Kennfeld kann die Spannung eines Bordnetzes des Kraftfahrzeugs sein, insbesondere aber zusätzlich die Temperatur, die z. B. mit einem geeigneten Temperatursensor gemessen wird oder aus anderen Größen (Umgebungstemperatur, Energieverbrauch des Motors) abgeschätzt wird. Das gegenwärtig aufzubringende Moment kann aus der gegenwärtig aufgebrachten Leistung (Produkt aus an dem Elektromotor anliegender Spannung und von dem Elektromotor gezogenem Strom) und der aktuellen Drehzahl ermittelt werden. Die Leistung ist das Produkt aus Drehzahl und Moment. Die Drehzahlreserve ist deswegen ein gutes Maß für die Belastung des Elektromotors der die Hilfskraft bereitstellenden Einheit, weil die Drehzahl nichts anderes als die Schnelligkeit angibt, mit der gelenkt wird. Die Drehzahlreserve gibt dann wieder, inwieweit sich diese Schnelligkeit noch ändern darf, ohne dass der Elektromotor überlastet wird. Die Schnelligkeit kann dann gegebenenfalls durch Änderung des insgesamt auf die dritte Welle gegebenen Zusatzwinkels so eingestellt werden, dass der Elektromotor mit Sicherheit nicht überlastet wird. Andererseits kann der Elektromotor bis zu einem gewissen Maß optimal ausgenutzt werden. Da in die Drehzahlreserve das auf die Räder wirkende Moment eingeht, das vom Untergrund, auf dem sich das Kraftfahrzeug bewegt, abhängig ist, arbeitet das erfindungsgemäße Verfahren insbesondere so, dass bei unterschiedlichem Untergrund der Elektromotor der die Hilfskraft bereitstellenden Einheit jeweils optimal ausgenutzt wird.

Alternativ oder zusätzlich kann die Größe, die als Maß für die aktuelle Belastung der Hilfskraftslenkung verwendet wird, auch eine an den Wellen gemessene Größe sein. Bei der ersten und der dritten Welle bietet sich hierbei das auf die Welle mehr wirkende Moment an, also bei der ersten Welle das Handmoment, bei der dritten Welle das Überlagerungs- oder Unterstützungsmoment. Bei der dritten Welle lässt sich dieses Moment auch indirekt durch die Stromstärke des Stroms, der dem mit der dritten Welle gekoppelten Elektromotor eingeprägt wird, wiedergeben. Im Bereich der zweiten Welle bietet sich an, die an der mit der zweiten Welle gekoppelten Zahnstange wirkende Kraft zu messen und auszuwerten.

Die aus dem Handmoment herrührende Kraft ergibt zusammen mit der aus dem Unterstützungsmoment herrührenden Kraft die Zahnstangenkraft. Somit weisen alle drei Größen jeweils auf die Ausnutzung der Hilfskraftlenkung hin. Es genügt also, eine dieser Größen zu untersuchen, gegebenenfalls noch eine zweite zusätzlich zu untersuchen, es müssen aber nicht alle drei Größen gleichzeitig ermittelt und ausgewertet werden. Wenn man das Handmoment oder das Überlagerungsmoment misst, bietet sich an, zusätzlich die Winkelgeschwindigkeit der zugehörigen Welle zu erfassen.

Es gibt zwei Möglichkeiten, wie die Werte zu zumindest einer Größe ausgewertet werden können: Die einfachste Möglichkeit ist es, einen Schwellwert vorzugeben. Je nach Definition der Größe kann die Situation a) gegeben sein, wenn der Schwellwert überschritten wird, oder wenn er unterschritten wird. In Verallgemeinerung lässt sich dies so formulieren, dass die Steuereinheit von Situation a) ausgeht, wenn der Wert in einen vorbestimmten Wertebereich fällt (z. B. von 0 bis zum Schwellwert), und dass sie von Situation b) ausgeht, wenn der Wert den vorbestimmten Wertebereich verlässt, also außerhalb dieses Wertebereichs fällt (sich also in dem komplementären Wertebereich vom Schwellwert bis zum maximal überhaupt möglichen Wert bewegt).

Insbesondere bei der Drehzahlreserve sollte der Grundbetrieb verlassen werden, wenn diese einen Schwellwert unterschreitet, damit die Leistungsgrenze nicht erreicht oder gar überschritten wird.

Es ist auch möglich, aus den auszuwertenden Werten für eine oder mehrere Größen eine andere Größe abzuleiten und anhand dieser anderen Größe dann zu entscheiden, ob Situation a) oder b) gegeben ist. Insbesondere ist es möglich, einen Grenzwert für die Winkelgeschwindigkeit der zweiten Welle aus den mitgeteilten Werten zu einer oder mehreren Größen zu ermitteln, sei dies rechnerisch aufgrund einer Rechenvorschrift als Zuordnungsvorschrift, sei dies aufgrund einer Zuordnungsvorschrift, die Gebrauch von einem Kennlinienfeld macht. Man kann dann von Situation a) ausgehen, wenn der tatsächliche Wert der Winkelgeschwindigkeit der zweiten Welle unterhalb des Grenzwertes liegt und von Situation b) ausgehen, wenn der tatsächliche Wert der Winkelgeschwindigkeit der zweiten Welle oberhalb des Grenzwertes liegt, denn wenn die Winkelgeschwindigkeit der zweiten Welle zu groß wird, wird ein Elektromotor der die Hilfskraft bereitstellenden Einheit überlastet. (Was geschieht, wenn tatsächliche Werte der Winkelgeschwindigkeit der zweiten Welle genau der Grenzwert ist, ist es für das Verfahren unerheblich, es kann Situation a) oder b) zugeordnet werden, oder der Grenzwert kann so definiert sein, dass er bei diskret ermittelten Werten zwischen zwei möglichen Werten liegt.) Der tatsächliche Wert der Winkelgeschwindigkeit der zweiten Welle kann entweder gemessen und der Steuereinheit über Signale mitgeteilt werden, oder er kann aus der Winkelgeschwindigkeit der ersten und der dritten Welle abgeleitet werden. Der Grenzwert für die Winkelgeschwindigkeit der zweiten Welle kann beispielsweise aus dem Handmoment oder dem Unterstützungsmoment ermittelt werden, und wenn zusätzlich die Winkelgeschwindigkeit der ersten und der dritten Welle erfasst werden, kann dann die tatsächliche Winkelgeschwindigkeit der zweiten Welle daraus ermittelt werden.

Wie oben bereits mitgeteilt, umfassen die vorbestimmten Vorgaben, die von der Steuereinheit für einen Grundbetrieb eingehalten werden, dass der erste Zusatzwinkel abhängig von einem der ersten Welle mittels der Lenkhandhabe aufgeprägten Lenkwinkel festgelegt wird.

Der zweite Zusatzwinkel wurde vorliegend insbesondere deswegen auch als gesonderter Winkel definiert, damit er nicht implizit vom ersten Zusatzwinkel abhängig ist. So ist es möglich, dass der zweite Zusatzwinkel völlig unabhängig von dem Lenkwinkel definiert ist, zum Beispiel einen stets gleichen festen Wert hat. Dies ermöglicht eine besonders schnelle Reaktion der Steuereinheit. Es ist auch möglich, dass der zweite Winkel ebenfalls abhängig von dem Lenkwinkel festgelegt wird, allerdings nicht in zu dem ersten Zusatzwinkel proportionaler Weise. Mit anderen Worten wird der zweite Zusatzwinkel in anderer Abhängigkeit von dem Lenkwinkel festgelegt als der erste Zusatzwinkel. Dann kann z. B. berücksichtigt werden, dass bei besonders großen Lenkwinkeln auch ein besonders großer zweiter Zusatzwinkel gewählt wird, damit dem großen Lenkwinkel entgegengewirkt werden kann. Das System kann jedoch auch genau anders herum arbeiten: Es kann zum Beispiel davon ausgehen, dass wenn im Falle eines besonders kleinen Lenkwinkels dennoch das Erfordernis für den zweiten Zusatzwinkel besteht, besagter zweiter Zusatzwinkel dann auch besonders groß gewählt sein soll, damit die Reaktion besonders durchgreifend ist.

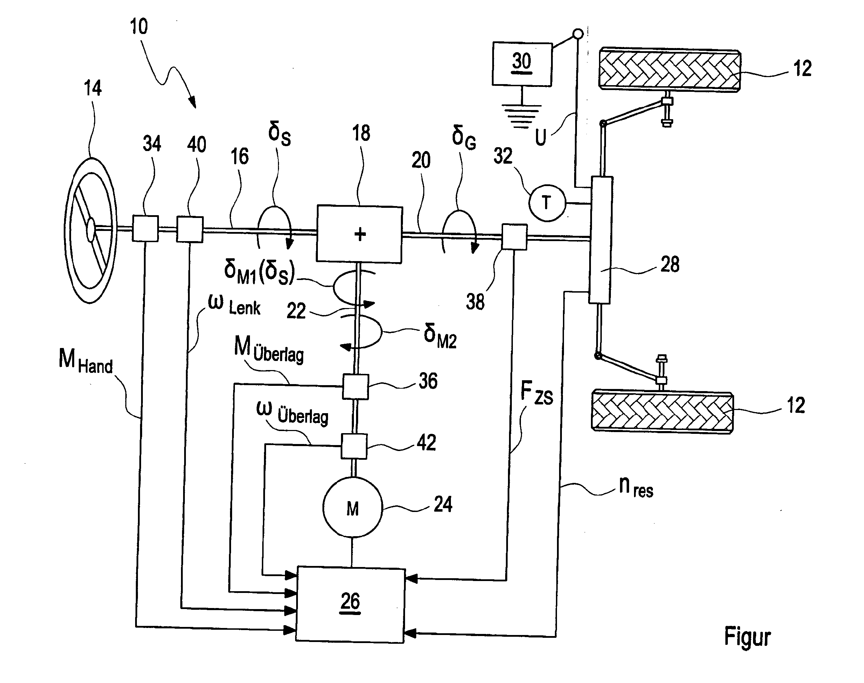

Nachfolgend wird eine bevorzugte Ausführungsform der Erfindung unter Bezug auf die Zeichnung beschrieben, in der die einzige Figur schematisch die zur Beschreibung der Erfindung in sämtlichen möglichen Ausführungsformen notwendigen Bauteile eines Kraftfahrzeugs zeigt, in dem das erfindungsgemäße Verfahren durchführbar ist.

In einem im Ganzen mit 10 bezeichneten Kraftfahrzeug, von dem die zur Beschreibung der Erfindung wesentlichen Teile gezeigt sind, können Räder 12 durch ein Lenkrad 14 gedreht werden. Das Lenkrad 14 ist mit einer ersten Welle 16 gekoppelt und prägt dieser einen Lenkwinkel δ_{S} auf. Der Lenkwinkel δ_{S} beziehungsweise ein zugehöriges Drehmoment wird in ein Überlagerungsgetriebe 18 eingeleitet, z. B. in ein Wellgetriebe oder auch in ein Planetengetriebe. Das Überlagerungsgetriebe 18 weist ausgangsseitig eine zweite Welle 20 auf, die sich um einen Winkel δ_{G} dreht. Kennzeichen des Überlagerungsgetriebes 18 ist es, dass von ihm ein Winkel δ_{M} über eine dritte Welle 22 einleitbar ist, nämlich unter der Wirkung eines Elektromotors 24. Im herkömmlichen Betrieb wird durch einen in der Figur nicht gezeigten Lenkwinkelsensor der Winkel δ_{S} gemessen, und in Anhängigkeit von den Messwerten legt eine Steuereinheit 26 einen Zusatzwinkel δ_{M1} fest. Der Winkel δ_{G} ergibt sich dann, typischerweise durch einfache Addition, aus den Winkeln δ_{S} und δ_{M1}.

Vorliegend weist das Kraftfahrzeug 10 noch ein Hilfskraftunterstützung 28 auf. Hierbei handelt es sich um ein eine Hilfskraft bereitstellendes System, durch das die auf die Räder 12 aufgrund der Lenkradbetätigung und der Aktion des Elektromotors 24 erzeugte Kraft zur Seite der Räder 12 hin verstärkt wird. Die Hilfskraftunterstützung 28 weist einen in der Figur nicht gezeigten Elektromotor auf.

Nun besteht das Problem, dass der Elektromotor der Hilfskraftunterstützung 28 überlastet werden kann: Kommt nämlich zu dem Fahrzeugführer über das Lenkrad 14 eingebrachten Winkel δ_{S} der zusätzliche Winkel δ_{M1} hinzu, kann bei schnellen Lenkvorgängen und hohen von dem Elektromotor in der Hilfskraftunterstützung 28 aufzubringenden Momenten mit erhöhter Wahrscheinlichkeit eine Überlastung des Elektromotors eintreten.

Dies soll vermieden werden. Damit dies möglich ist, werden im Rahmen der vorliegenden Erfindung der Steuereinheit 26 Informationen zugeführt.

So ist es möglich, der Steuereinheit 26 eine Drehzahlreserve nᵣₑₛ mitzuteilen, also den Unterschied zwischen einer aktuell maximal möglichen Drehzahl und der tatsächlichen Drehzahl.

Zu dem Elektromotor der Hilfskraftunterstützung 28 lässt sich ermitteln, bei welcher anliegenden Spannung U welche er welche Stromstärke 1 zu seinem Betrieb benötigt. Die von dem Elektromotor aufgebrachte Leistung ergibt sich somit als Pᵢₛₜ=U·I. Gleichzeitig lässt sich die Drehzahl nᵢₛₜ durch einen (in der Figur nicht gezeigten) Lagegeber beziehungsweise Inkrementengeber am Rotor des Elektromotors ermitteln. Daraus lässt sich das von dem Elektromotor aufzubringende Moment Mᵢₛₜ ableiten gemäß Mᵢₛₜ=Pᵢₛₜ/nᵢₛₜ

Der Betriebspunkt, der den Elektromotor einnimmt, ist daher bekannt, und es lässt sich situativ abhängig ermitteln, welche Leistung der Elektromotor unter den vorherrschenden Bedingungen maximal erbringen kann. Hierzu gibt es eine Kennlinie für die Leistungsgrenze im n-M-Diagramm. Bei der Auswahl der Kennlinie kann berücksichtigt werden, dass die maximale Leistungsfähigkeit des Elektromotors von der Bordnetzspannung eines Bordnetzes 30 im Kraftfahrzeug abhängig ist. Genauso ist die Leistungsfähigkeit auch von der Temperatur abhängig, welche durch einen Sensor 32 ermittelbar ist, der wie das Bordnetz 30 mit der Hilfskraftunterstützung 28 gekoppelt ist. Die Hilfskraftunterstützung 28 beziehungsweise eine intelligente Einheit (Datenverarbeitungseinheit oder zugehörige Steuereinheit) kann in Abhängigkeit von der Bordnetzspannung der Temperatur dann aus einem Kennlinienfeld die zugehörige Kennlinie auswählen oder die zugehörige Kennlinie aufgrund einer Rechenvorschrift ermitteln. Anhand der Kennlinie kann dann die Lage von nᵢₛₜ relativ zur Leistungsgrenze ermittelt werden und so nᵣₑₛ abgeleitet werden.

Die Steuereinheit 26 kann, wenn die Drehzahlgrenze nᵣₑₛ einen vorbestimmten Grenzwert unterschreitet, veranlassen, dass der Elektromotor 24 der dritten Welle 22 einen zweiten Zusatzwinkel δ_{M2} aufprägt. Während δ_{M1} von δ_{S} abhängig ist, muss δ_{M2} nicht notwendiger Weise von δ_{S} abhängig sein. δ_{M2} sollte ein Winkel in Gegenrichtung zu δ_{M1} sein, ist δ_{M1} also ein positiver Winkel, sollte δ_{M2} ein negativer Winkel sein. Dadurch wird der Zusatzwinkel insgesamt verringert, die Summe aus δ_{M1} und δ_{M2} kann sogar insgesamt negativ werden. Verringert sich δ_{G}, nimmt die Belastung der Hilfskraftunterstützung 28 beziehungsweise des darin befindlichen Elektromotors ab. Dadurch reduziert sich die Drehzahl nᵢₛₜ, mit einer Mindestdrehzahlreserve n_{res,min}, die mehr oder weniger identisch mit dem gewählten Schwellwert sein wird, wenn sich die Umweltbedingungen nicht ändern.

Alternativ oder zusätzlich kann das von dem Lenkrad 14 auf die erste Welle 16 aufgebrachte Drehmoment (Handmoment M_{Hand}) durch einen Drehmomentsensor 34 gemessen werden und der Steuereinheit 26 mitgeteilt werden. Auch das von dem Elektromotor 24 auf die dritte Welle 22 aufgebrachte Überlagerungsmoment M_{Überlag} kann durch einen Sensor 36 gemessen werden und der Steuereinheit 26 mitgeteilt werden. Schließlich kann auch noch die auf ein in der Figur nicht explizit gezeigte Zahnstange des Lenkungssystems wirkende Zahnstangenkraft durch einen Kraftsensor 38 gemessen und der Steuereinheit 26 mitgeteilt werden. Aus zumindest einem Teil der so zugeführten Messwerte lässt sich ein dynamischer Grenzwert für die Summenwinkelgeschwindigkeit ableiten, nämlich die Geschwindigkeit, mit der sich die zweite Welle 20 dreht. Die Drehgeschwindigkeit ω_{G} lässt sich aus der Lenkgeschwindigkeit der dritten Welle 22 ermitteln, wobei die Lenkgeschwindigkeit ω_{Lenk} durch einen Sensor 40 ermittelt werden kann und die Überlagerungsgeschwindigkeit, mit der die dritte Welle 22 gedreht wird, ω_{Ü-berlag}, von einem Sensor 42 gemessen werden kann. Diesenfalls können auch Winkelsensoren Signale der Steuereinheit 26 zuführen, und diese kann aus den Winkelsignalen die Geschwindigkeiten errechnen.

Es ist somit möglich, die tatsächliche Drehgeschwindigkeit der zweiten Welle 20 zu ermitteln und diese mit dem dynamischen Grenzwert zu vergleichen.

Überschreitet die Winkelgeschwindigkeit der zweiten Welle 20 den Grenzwert, wird wieder durch die Steuereinheit 26 veranlasst, dass der Elektromotor 24 die dritte Welle 22 mit einem weiteren Zusatzwinkel δ_{M2} beaufschlagt.

Es versteht sich aufgrund der obigen Darstellung von selbst, dass sich die Erfindung in einem Kraftfahrzeug verwirklicht werden kann, das nicht sämtliche der in der Figur gezeigten Bauteile aufweist. Die Erfindung ist bereits ausführbar, wenn lediglich die Drehzahlreserve mitgeteilt und ermittelt wird. Die Ermittlung ist genauso auch ausführbar, wenn lediglich nur ein Teil der Sensoren 34, 36, 38, 40 und 42 vorhanden ist.

Bei der Mitteilung der Drehzahlreserve ist davon ausgegangen, dass diese in einer geeigneten intelligenten Einheit der Hilfskraftunterstützung 28 ermittelt wird. Es ist genauso auch möglich, die Drehzahlreserve in der Steuereinheit 26 selbst zu ermitteln. Dann muss selbige mit dem Bordnetz 30 und dem Temperatursensor 32 gekoppelt sein, über die Information verfügen, mit welchem Strom bei welcher Spannung der Elektromotor der Hilfskraftunterstützung 28 beaufschlagt wird, und schließlich muss die Steuereinheit 26 in diesem Falle eine Information über die tatsächliche Drehzahl erhalten. Insofern, als in der vorliegenden Erfindung von einem Übermitteln von Signalen gesprochen wird, ist dies auch so zu verstehen, dass innerhalb einer Steuereinheit die mitzuteilenden Werte erst aufgrund anderer Werte ermittelt werden und dann in einem Bauteil der Steuereinheit abgelegt werden, zum Beispiel in einem Arbeitsspeicher, von wo sie aus wieder ausgelesen werden können.

Die Erfindung nutzt in einem Aspekt mit der Drehzahlreserve (nᵣₑₛ) eine Größe, die in derartigen Systemen bisher noch gar nicht ermittelt wird. In einem anderen Aspekt nutzt sie Informationen, über Momente (M_{Hand}, M_{Überlag}) sowie eine Kraft (F_{ZS}) in bisher noch nicht bekannter Weise.

Es wird durch die Erfindung möglich, das Gesamtsystem so auszulegen, dass der Elektromotor der Hilfskraftunterstützung 28 optimal ausgenutzt wird, zum Beispiel immer auf definierte Weise mehr oder weniger knapp unter seiner Leistungsgrenze bleibt.

## Patentansprüche

1. Verfahren zum Betreiben eines Lenkungssystems in einem Kraftfahrzeug (10), wobei in dem Lenkungssystem mittels einer Lenkhandhabe (14) eine erste Welle (16) drehbar ist, die über ein Überlagerungsgetriebe (18) die Drehung einer zweiten Welle (20) bewirkt, welche über eine eine Hilfskraft bereitstellende Einheit (28) mit Rädern (12) gekoppelt ist, und wobei in das Überlagerungsgetriebe (18) auch eine dritte Welle (22) hineingeführt ist, der von einem Elektromotor (24) eine Drehung aufprägbar ist, die sich in einer zusätzlichen Drehung der zweiten Welle (20) auswirkt, wobei der Elektromotor (24) von einer Steuereinheit (26) angesteuert wird, der vorbestimmte Vorgaben für einen Grundbetrieb zugeordnet sind, wobei Signale zur Mitteilung von aktuellen Werten zumindest einer Größe (nᵣₑₛ, M_{Hand}, M_{Über}-lag) F_{ZS}, ω_{Lenk}, ω_{Überlag}), die ein Maß für die aktuelle Belastung der eine Hilfskraft bereitstellenden Einheit (28) ist, der Steuereinheit (26) zugeführt werden, **dadurch gekennzeichnet dass** je nach den mitgeteilten Werten die Steuereinheit
entweder gemäß Situation a)
die Drehung der dritten Welle um einen ersten Zusatzwinkel (δ_{M1}) veranlasst, der ausschließlich durch die vorbestimmten Vorgaben festgelegt ist,
oder gemäß Situation b)
die Drehung der dritten Welle sowohl um einen ersten Zusatzwinkel (δ_{M1}) veranlasst, der ausschließlich durch die vorbestimmten Vorgaben festgelegt ist, als auch um einen zweiten Zusatzwinkel (δ_{M2}) veranlasst.

2. Verfahren nach Anspruch 1, bei dem die zumindest eine Größe eine Drehzahlreserve (nᵣₑₛ) zu einem Elektromotor der die Hilfskraft bereitstellende Einheit (28) umfasst.

3. Verfahren nach Anspruch 1 oder 2, bei dem die zumindest eine Größe
a) ein auf die erste Welle wirkendes Moment (M_{Hand}) oder zusätzlich die Winkelgeschwindigkeit (ω_{Lenk}) der ersten Welle 16 umfasst,
und/oder
b) ein auf die dritte Welle (22) wirkendes Moment (M_{Überlag}) beziehungsweise die Stromstärke eines dem mit der dritten Welle (22) gekoppelten Elektromotor (24) aufgeprägten Stroms oder zusätzlich die Winkelgeschwindigkeit (ω_{Überlag}) der dritten Welle (22) umfasst
und/oder
c) eine auf eine mit der zweiten Welle (20) gekoppelte Zahnstange wirkende Kraft (F_{ZS}) umfasst.

4. Verfahren nach einem der Ansprüche 1 bis 3, bei dem die Steuereinheit (26) von Situation a) ausgeht, wenn der Wert in einen vorbestimmten Wertebereich fällt und von Situation b) ausgeht, wenn der Wert außerhalb dieses Wertebereichs liegt.

5. Verfahren nach einem der Ansprüche 1 bis 3, bei dem die Steuereinheit aus einem mitgeteilten Wert zu einer oder mehreren Größen gemäß einer Zuordnungsvorschrift einen Grenzwert für die Winkelgeschwindigkeit der zweiten Welle (20) ermittelt und von Situation a) ausgeht, wenn der tatsächliche Wert der Winkelgeschwindigkeit der zweiten Welle (20) unterhalb des Grenzwerts liegt und von Situation b) ausgeht, wenn der tatsächliche Wert der Winkelgeschwindigkeit der zweiten Welle (20) oberhalb dieses Grenzwertes liegt und hierbei der zweite Winkel in Gegenrichtung zum ersten Winkel (δ_{M1}) gerichtet ist.

6. Verfahren nach einem der vorherigen Ansprüche, bei dem die vorbestimmten Vorgaben beinhalten, dass der erste Zusatzwinkel (δ_{M1}(δ_{S})) abhängig von einem der ersten Welle (16) mittels der Lenkhandhabe (14) aufgeprägten Lenkwinkel (δ_{S}) festgelegt wird.

7. Verfahren nach Anspruch 6 nach dem der zweite Zusatzwinkel (δ_{M2}) unabhängig von dem Lenkwinkel (δ_{S}) definiert ist.

8. Verfahren nach Anspruch 6, bei dem der zweite Zusatzwinkel (δ_{M2}) abhängig von dem Lenkwinkel (δ_{S}) in zu dem ersten Zusatzwinkel (δ_{M1}) unproportionaler Weise festgelegt wird.

## Claims

1. Method for operating a steering system in a motor vehicle (10), a first shaft (16) being rotatable in the steering system by means of a steering handle (14) and bringing into rotation via an override transmission (18) a second shaft (20), which is coupled to wheels (12) via a power-assistance unit (28), and a third shaft (22) also being introduced into the override transmission (18) and being capable of being brought into rotation by an electric motor (24), thus causing a further rotation of the second shaft (20), the electric motor (24) being actuated by a control unit (26) to which predetermined default settings for basic operation are assigned, signals for communicating current values of at least one measurement (nᵣₑₛ, M_{Hand}, M_{Override}, F_{SR}, ω_{Steer}, ω_{Overtide}) which is a measure indicating the current load of the power-assistance unit (28) being supplied to the control unit (26), **characterised in that**, depending on the communicated values, the control unit either, according to situation a), causes the third shaft to rotate about a first auxiliary angle (σ_{M1}), which is established solely by the predetermined default settings or, according to situation b), causes the third shaft to rotate about both a first auxiliary angle (σ_{M1}), which is established solely by the predetermined default settings, and a second auxiliary angle (σ_{M2}).

2. Method according to claim 1, in which the at least one measurement comprises a rotational speed reserve (nᵣₑₛ) relating to an electric motor of the power-assistance unit (28).

3. Method according to either claim 1 or claim 2, in which the at least one measurement comprises:
a) a torque (M_{Hand}) acting on the first shaft or, in addition, the angular speed (ω_{Steer}) of the first shaft 16;
and/or
b) a torque (ω_{Override}) acting on the third shaft (22) or the amperage of a current induced in the electric motor (24) coupled to the third shaft (22) or, in addition, the angular speed (ω_{Override}) of the third shaft (22);
and/or
c) a force (F_{SR}) acting on a steering rack coupled to the second shaft (20).

4. Method according to any of claims 1 to 3, in which the control unit (26) acts on the assumption of situation a) when the value is within a predetermined range of values and of situation b) when the value is outside this range of values.

5. Method according to any of claims 1 to 3, in which the control unit detects, from a communicated value relating to one or more measurements, a threshold, according to an assignment specification, for the angular speed of the second shaft (20), and acts on the assumption of situation a) when the actual value of the angular speed of the second shaft (20) is below the threshold and acts on the assumption of situation b) when the actual value of the angular speed of the second shaft (20) exceeds this threshold and in this case the second angle is oriented counter to the first angle (σ_{M1}).

6. Method according to any of the preceding claims, in which the predetermined default settings involve the first auxiliary angle (σ_{M1}(σ_{S})) being established as a function of a steering angle (σ_{S}) induced in the first shaft (16) by means of the steering handle (14).

7. Method according to claim 6, according to which the second auxiliary angle (σ_{M2}) is defined independently of the steering angle (σ_{S}).

8. Method according to claim 6, in which the second auxiliary angle (σ_{M2}) is established as a function of the steering angle (σₛ) in a manner which is disproportionate to the first auxiliary angle (σ_{M1}).

## Revendications

1. Procédé d'exploitation d'un système de direction dans un véhicule automobile (10), dans lequel, dans le système de direction, au moyen d'un volant de direction (14), on peut faire tourner un premier arbre (16) qui, via une transmission superposée (18), provoque la rotation d'un deuxième arbre (20), qui est couplé, via une unité (28) d'affectation d'une force auxiliaire, à des roues (12), et dans lequel, dans la transmission superposée (18), est guidé également un troisième arbre (22), auquel peut être imprimée via un moteur électrique (24) une rotation qui se traduit par une rotation supplémentaire du deuxième arbre (20), dans lequel le moteur électrique (24) est commandé par une unité de commande (26), à laquelle des consignes prédéterminées sont affectées pour une exploitation de base, dans lequel des signaux permettant de communiquer des valeurs courantes d'au moins une grandeur (n_{rés}, M_{vol,} Mₛᵤₚₑᵣ, F_{crém}, ω_{dir}, ωₛᵤₚₑᵣ), qui est une mesure de la charge courante de l'unité (28) d'affectation d'une force auxiliaire, sont acheminés à l'unité de commande (26), **caractérisé en ce que**, en fonction des valeurs communiquées, l'unité de commande
soit, selon la situation a),
commande la rotation du troisième arbre d'un premier angle d'appoint (δ_{M1}), qui est fixé exclusivement par les consignes prédéterminées,
soit, selon la situation b),
commande la rotation du troisième arbre autant d'un premier angle d'appoint (δ_{M1}), qui est exclusivement fixé par les consignes prédéterminées, que d'un second angle d' appoint (δ_{M2}).

2. Procédé selon la revendication 1, dans lequel la au moins une grandeur comprend une réserve de vitesse de rotation (n_{rés}) à un moteur électrique de l'unité (28) d'affectation de la force auxiliaire.

3. Procédé selon la revendication 1 ou 2, dans lequel la au moins une grandeur
a) comprend un moment (Mᵥₒₗ) agissant sur le premier arbre ou en plus la vitesse angulaire (ω_{dir}) du premier arbre (16),
et/ou
b) comprend un moment (Mₛᵤₚₑᵣ) agissant sur le troisième arbre (22) ou l'intensité d'un courant imprimé par le moteur électrique (24) couplé au troisième arbre (22) ou en plus la vitesse angulaire (ωₛᵤₚₑᵣ) du troisième arbre (22),
et/ou
c) comprend une force (F_{crém}) agissant sur une crémaillère couplée au deuxième arbre (20).

4. Procédé selon l'une quelconque des revendications 1 à 3, dans lequel l'unité de commande (26) part de la situation a) si la valeur tombe dans une plage prédéterminée de valeurs et part de la situation b) si la valeur se situe en dehors de cette plage de valeurs.

5. Procédé selon l'une quelconque des revendications 1 à 3, dans lequel l'unité de commande détermine à partir d'une valeur communiquée à une ou plusieurs grandeurs selon une instruction d'affectation une valeur limite pour la vitesse angulaire du deuxième arbre (20) et part de la situation a) si la valeur réelle de la vitesse angulaire du deuxième arbre (20) se situe en dessous de la valeur limite et part de la situation b) si la valeur réelle de la vitesse angulaire du deuxième arbre (20) se situe au-dessus de cette valeur limite et, en l'occurrence, le second angle est dirigé à l'opposé de la direction du premier angle (δ_{M1}).

6. Procédé selon l'une quelconque des revendications précédentes, dans lequel les consignes prédéterminées impliquent que le premier angle d' appoint (δ_{M1}(δ_{S})) est fixé en fonction d'un angle de direction (δ_{S}) imprimé au premier arbre (16) au moyen du volant de direction (14).

7. Procédé selon la revendication 6, dans lequel le second angle d'appoint (δ_{M2}) est défini indépendamment de l'angle de direction (δ_{S}).

8. Procédé selon la revendication 6, dans lequel le deuxième angle d'appoint (δ_{M2}) est fixé en fonction de l'angle de direction (δ_{S}) de manière non proportionnelle au premier angle d'appoint (δ_{M1}).
